# EUROPEAN PATENT APPLICATION

(11) **EP 4 445 989 A1**
(43) Date of publication of application: **16.10.2024**
(21) Application number: 24158370.7
(22) Date of filing: 19.02.2024
(51) Int. Cl.: B01D 53/30, F24F 8/10, F24F 11/30, F24F 11/65, F24F 11/58, F24F 110/64, F24F 110/66, F24F 110/70, F24F 110/72, F24F 110/74

(54) **METHOD FOR PURIFYING AIR POLLUTION IN INDOOR SPACE TO LEVEL CLOSE TO ZERO**

(30) Priority: 29.03.2023 TW 112112046
(71) Applicant: Microjet Technology Co., Ltd., Hsinchu (TW)
(72) Inventor: Mou, Hao-Jan, Hsinchu (TW); Wu, Chin-Chuan, Hsinchu (TW); Han, Yung-Lung, Hsinchu (TW); Huang, Chi-Feng, Hsinchu (TW)
(74) Representative: Uexküll & Stolberg

(57) **Abstract**

A method for purifying an air pollution in an indoor space to a level close to zero includes providing an indoor leaking detection for blocking an outdoor air from entering the indoor space; and providing an indoor monitoring system including plural gas detection devices (A, 3), a central controlling monitor (B) and plural air-exchanging filtration devices (C), wherein the gas detection devices (A, 3) detect the property and concentration of the air pollution and output outdoor/indoor air pollution data, the central controlling monitor (B) receives the outdoor/indoor air pollution data, performs an intelligent computation to compare thereof and determine an air pollution location, and issues a control instruction, and the air-exchanging filtration devices (C) receive the control instruction and perform an enabling and adjusting mechanism for guiding the air pollution to pass through the air-exchanging filtration devices (C) for being purified to a level of zero or close to zero, thereby cleaning the air pollution to a breathable state.

## Description

### FIELD OF THE INVENTION

The present disclosure relates to a method for purifying an air pollution in an indoor space to a level close to zero, in which a plurality of gas detection devices, a central controlling monitor and a plurality of air-exchanging filtration devices are utilized to detect and filter the air pollution and form a detection-based cleaning for promptly and quickly purifying the air pollution to a level of zero or close to zero, thereby cleaning the air pollution to a breathable state.

### BACKGROUND OF THE INVENTION

In recent years, people pay more and more attention to the air quality around our daily lives. Particulate matter (PM), such as PM1 PM2.5, PM10, gases, such as carbon dioxide, total volatile organic compounds (TVOC), formaldehyde etc., and even suspended particles, aerosols, bacteria and viruses contained in the air are all exposed in the environment and might affect the human health, and even endanger people's lives seriously. It is worth noting that the air pollution problem in an indoor space has gradually attracted people's attention. Therefore, it is an issue of concern developed in the present disclosure to provide a method for purifying the indoor air pollution to prevent from breathing harmful gases in the indoor space, monitor the air quality in the indoor space in real time, and purify the air in the indoor space quickly when the air quality is poor.

### SUMMARY OF THE INVENTION

The major object of the present disclosure is to provide a method for purifying an air pollution in an indoor space to a level close to zero. First, an indoor leaking detection is provided and a blocking process is executed for blocking an outdoor air from entering the indoor space and maintaining the air pollution in the indoor space not increased. Further, an indoor monitoring system is applied in the indoor space. In the indoor monitoring system, a plurality of gas detection devices detect an air quality in the indoor space in real time and output signals to a central controlling monitor for performing an intelligent computation for comparison. The central controlling monitor is further connected to a cloud device for performing various mathematical computations and artificial intelligence computations to determine an air pollution location in the indoor space, so as to intelligently and selectively issue a control instruction. The control instruction enables one of a plurality of air-exchanging filtration devices which is closest to the air pollution location to generate an air flow for guiding the air pollution to the plurality of air-exchanging filtration devices for performing a convectional and circular filtering. The enablement of the plurality of air-exchanging filtration devices is based on the detected air quality, so the air pollution can be filtered, air-exchanged and purified to a safe detection value as detected by the plurality of gas detection devices in the indoor space, and a detection-based cleaning which promptly and quickly purifies the air pollution to a level of zero or close to zero can be formed, thereby cleaning the air pollution to a breathable state, and also achieving efficiencies of positioning air pollution, guiding air pollution and cleaning air pollution.

In a broader aspect of the present disclosure, a method for purifying an air pollution in an indoor space to a level close to zero is provides. The method includes providing an indoor leaking detection for blocking an outdoor air from entering the indoor space; and providing an indoor monitoring system in the indoor space, the indoor monitoring system including a plurality of gas detection devices, a central controlling monitor and a plurality of air-exchanging filtration devices, wherein the plurality of gas detection devices include at least one indoor gas detector and at least one outdoor gas detector for detecting a property and a concentration of the air pollution and outputting outdoor air pollution data and indoor air pollution data, the central controlling monitor receives the outdoor air pollution data and the indoor air pollution data, performs an intelligent computation to compare thereof and determine an air pollution location in the indoor space, and intelligently and selectively issues a control instruction, and the plurality of air-exchanging filtration devices receive the control instruction and perform an enabling and adjusting mechanism for guiding the air pollution to pass through the plurality of air-exchanging filtration devices for being filtered and air-exchanged so as to achieve a safe detection value as detected by the plurality of gas detection devices in the indoor space, and for forming a detection-based cleaning which promptly and quickly purifies the air pollution to a level of zero or close to zero, thereby cleaning the air pollution to a safely breathable state.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1A is a schematic view illustrating a concept of how to perform a method for purifying an air pollution in an indoor space to a level close to zero according to an embodiment of the present disclosure;
FIG. 1B is a schematic view illustrating a concept of how to perform the method for purifying the air pollution in the indoor space to a level close to zero according to another embodiment of the present disclosure;
FIG. 2A is a schematic view illustrating a gas detection device with an external power terminal according to an embodiment of the present disclosure;
FIG. 2B is a schematic view illustrating an assembly relationship of components of the gas detection device with the external power terminal according to the embodiment of the present disclosure;
FIG. 2C is a schematic view illustrating an assembly relationship of components of the gas detection device without an external power terminal according to an embodiment of the present disclosure;
FIG. 3A is a schematic view illustrating an assembly relationship of an air-exchanging filtration device according to an embodiment of the present disclosure;
FIG. 3B is a schematic view illustrating a filter element of the air-exchanging filtration device according to an embodiment of the present disclosure;
FIG. 4A is a first schematic view illustrating an assembled gas detection main body of the gas detection device according to an embodiment of the present disclosure;
FIG. 4B is a second schematic view illustrating the assembled gas detection main body of the gas detection device according to the embodiment of the present disclosure;
FIG. 4C is a schematic exploded view illustrating the gas detection main body of the gas detection device according to the embodiment of the present disclosure;
FIG. 5A is a first schematic view illustrating a base of the gas detection main body according to an embodiment of the present disclosure;
FIG. 5B is a second schematic view illustrating the base of the gas detection main body according to the embodiment of the present disclosure;
FIG. 6 is a third schematic view illustrating the base of the gas detection main body according to the embodiment of the present disclosure;
FIG. 7A is a schematic exploded view illustrating a piezoelectric actuator and the base of the gas detection main body according to an embodiment of the present disclosure;
FIG. 7B is a schematic view illustrating the combination of the piezoelectric actuator and the base of the gas detection main body according to the embodiment of the present disclosure;
FIG. 8A is a first schematic exploded view illustrating the piezoelectric actuator according to an embodiment of the present disclosure;
FIG. 8B is a second schematic exploded view illustrating the piezoelectric actuator according to the embodiment of the present disclosure;
FIG. 9A is a first schematic cross-sectional view illustrating the operation step of the piezoelectric actuator according to an embodiment of the present disclosure;
FIG. 9B is a second schematic cross-sectional view illustrating the operation step of the piezoelectric actuator according to the embodiment of the present disclosure;
FIG. 9C is a third schematic cross-sectional view illustrating the operation step of the piezoelectric actuator according to the embodiment of the present disclosure;

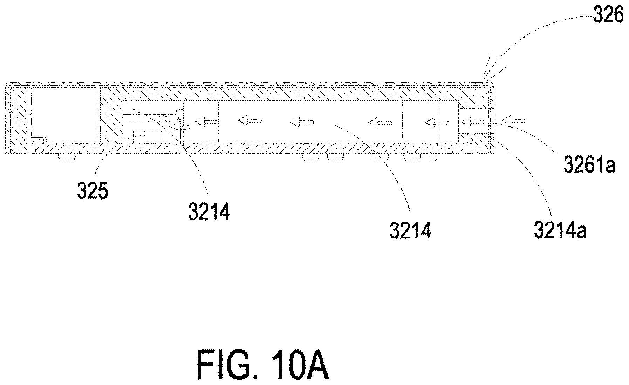

FIG. 10A is a first schematic cross-sectional view illustrating the assembled gas detection main body according to an embodiment of the present disclosure;

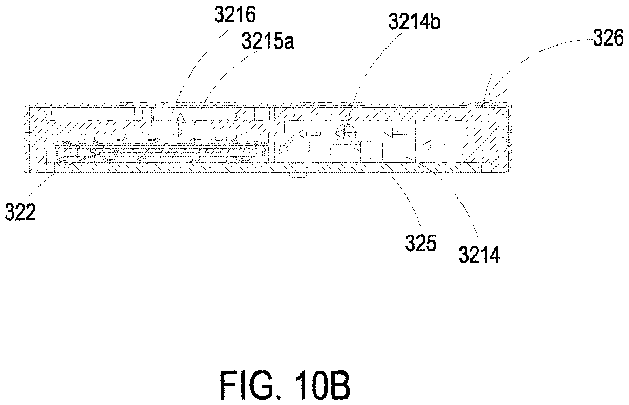

FIG. 10B is a second schematic cross-sectional view illustrating the assembled gas detection main body according to the embodiment of the present disclosure;

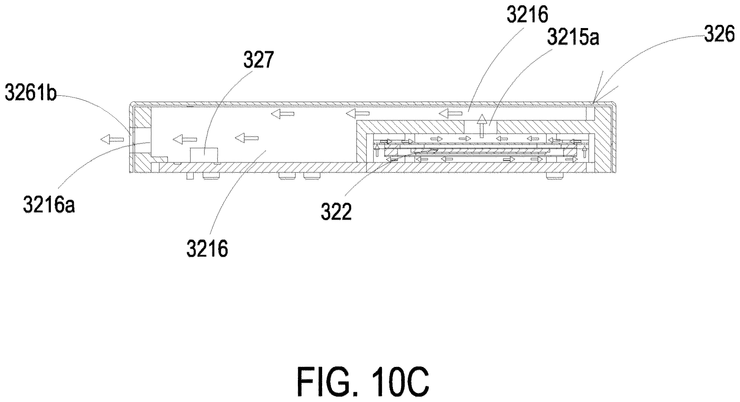

FIG. 10C is a third schematic cross-sectional view illustrating the assembled gas detection main body according to the embodiment of the present disclosure; and
FIG. 11 is a block diagram illustrating the gas detection device and a communication thereof according to an embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

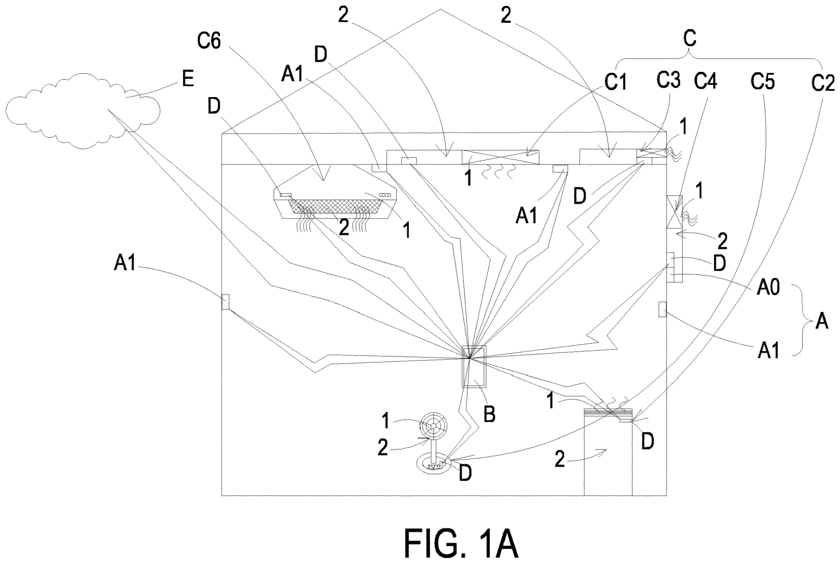

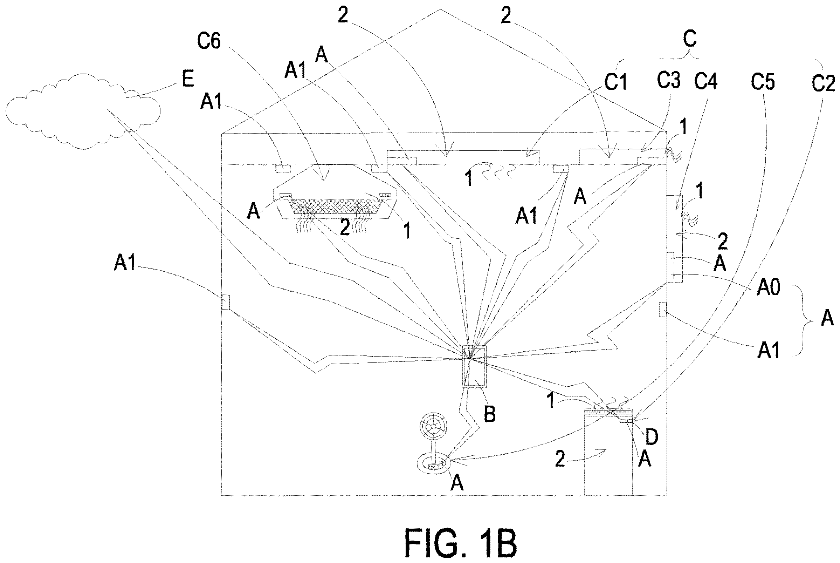

Please refer FIG. 1A and FIG. 1B. The present disclosure provides a method for purifying an air pollution in an indoor space to a level close to zero. The method includes providing an indoor leaking detection for blocking an outdoor air from entering the indoor space, and providing an indoor monitoring system in the indoor space. In the embodiment, the indoor leaking detection utilizes a heat source analysis of far infrared rays for preventively detecting a leaking at the door, the window and/or the partition between the indoor space and an outdoor space, and then, a blocking process is executed to prevent the outdoor air from entering the indoor space, so that the air pollution in the indoor space can be maintained not increased. Further, through cooperating with the indoor monitoring system applied in the indoor space, a detection-based cleaning for quickly and promptly purifying the air pollution to a level of zero or close to zero can be achieved, thereby cleaning the air pollution to a safely breathable state.

The indoor monitoring system mentioned above includes a plurality of gas detection devices A, a central controlling monitor B and a plurality of air-exchanging filtration devices C. The plurality of gas detection devices A are provided for detecting a property and a concentration of the air pollution and outputting outdoor air pollution data and indoor air pollution data. The central controlling monitor B receives the outdoor air pollution data and the indoor air pollution data, performs an intelligent computation to compare thereof, and intelligently and selectively issues a control instruction through a wireless communication. The plurality of air-exchanging filtration devices C are enabled after receiving the control instruction for guiding the air pollution to pass through the plurality of air-exchanging filtration devices for being filtered and air exchanged so as to achieve a safe detection value as detected by the plurality of gas detection devices A in the indoor space, and also for being purified to a level of zero or close to zero, thereby cleaning the air pollution to a breathable state. In the embodiment, the air pollution is one selected from the group consisting of particulate matter, carbon monoxide, carbon dioxide, ozone, sulfur dioxide, nitrogen dioxide, lead, total volatile organic compounds, formaldehyde, bacteria, fungi, virus, and a combination thereof.

The plurality of gas detection devices A mentioned above include at least one outdoor gas detector A0 and at least one indoor gas detector A1. The outdoor gas detector A0 is provided for detecting the property and the concentration of the air pollution (qualitative and quantitative analysis) and outputting the outdoor air pollution data. The indoor gas detector A1 is provided for detecting the property and the concentration of the air pollution and outputting the indoor air pollution data. The outputs of the outdoor air pollution data and the indoor air pollution data are performed through a wireless communication. In the embodiment, the wireless communication is performed by one selected from the group consisting of a Wi-Fi module, a Bluetooth module, a radio frequency identification module, and a near field communication module.

The central controlling monitor B mentioned above receives the outdoor air pollution data and the indoor air pollution data through the wireless communication, performs the intelligent computation to compare thereof, and intelligently and selectively issues the control instruction. In the embodiment, the wireless communication is performed by one selected from the group consisting of a Wi-Fi module, a Bluetooth module, a radio frequency identification module, and a near field communication module.

Each of the air-exchanging filtration devices C mentioned above includes at least one gas guider 1 and at least one filter element 2. The air-exchanging filtration device C is cooperated with an intelligent switch D for enabling the gas guider after receiving the control instruction, so that the air pollution is guided to pass through the filter element 2 for being filtered and air-exchanged to achieve the safe detection value as detected by the plurality gas detection devices in the indoor space, and also for being purified to a level close to zero, thereby cleaning the air pollution to a breathable state. In the embodiment, the safe detection value includes at least one selected from the group consisting of a concentration of particulate matter 2.5 (PM2.5) which is less than 10 µg/m³, a concentration of carbon dioxide (CO2) which is less than 1000 ppm, a concentration of total volatile organic compounds (TVOC) which is less than 0.56 ppm, a concentration of formaldehyde (HCHO) which is less than 0.08 ppm, a colony-forming unit of bacteria which is less than 1500 CFU/m³, a colony-forming unit of fungi which is less than 1000 CFU/m³, a concentration of sulfur dioxide which is less than 0.075 ppm, a concentration of nitrogen dioxide which is less than 0.1 ppm, a concentration of carbon monoxide which is less than 9 ppm, a concentration of ozone which is less than 0.06 ppm, and a concentration of lead which is less than 0.15 µg/m³. The safe detection value also includes the level of zero or close to zero of the indoor air pollution data detected from the air pollution.

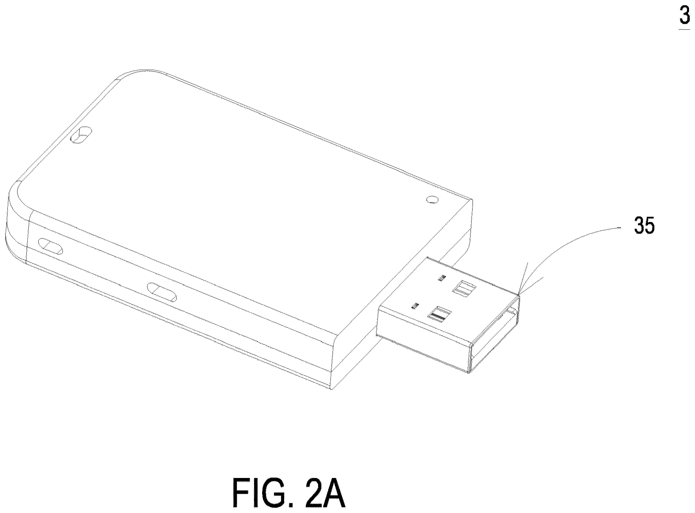

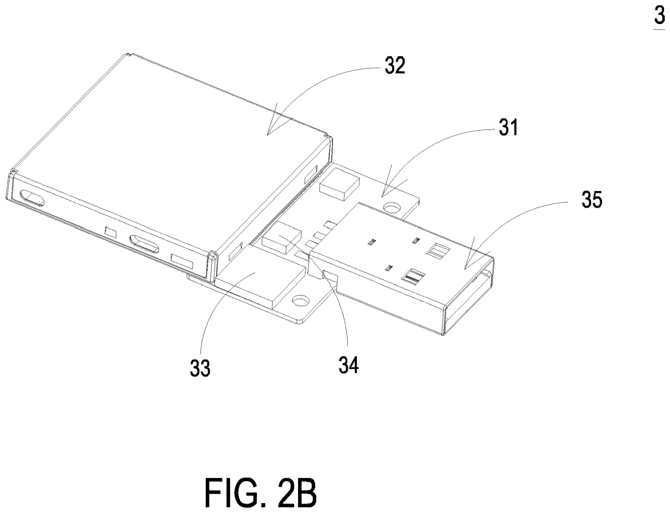

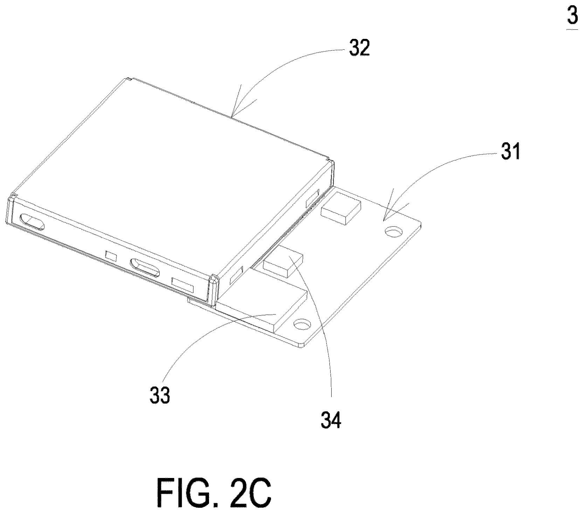

The outdoor gas detector A0 and the indoor gas detector A1 are respectively a gas detection device and are both represented by a reference number 3 in the following descriptions. Preferably but not exclusively, the gas detection device is a gas detection device 3 as shown in FIG. 2A and FIG. 2B which includes an external power terminal 35, wherein the external power terminal 35 is integrated with a controlling circuit board 31 and extended out of a housing of the gas detection device 3. Alternatively, the gas detection device is a gas detection device 3 as shown in FIG. 2C which is not integrated with an external power terminal.

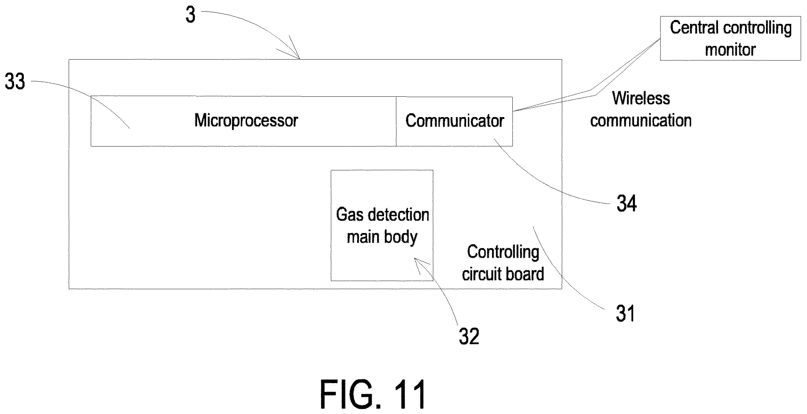

The gas detection device 3 mentioned above includes a controlling circuit board 31, a gas detection main body 32, a microprocessor 33 and a communicator 34. The gas detection main body 32, the microprocessor 33 and the communicator 34 are integrally packaged on and electrically connected to the controlling circuit board 31. The microprocessor 33 controls the operation of the gas detection main body 32. The gas detection main body 32 detects the air pollution and outputs a detection signal. The microprocessor 33 receives, calculates and processes the detection signal for generating and outputting the outdoor/indoor air pollution data, and the outdoor/indoor air pollution data is provided to the communicator 34 for externally transmitting through a wireless communication. In the embodiment, the communicator 34 transmits the outdoor/indoor air pollution data to the central controlling monitor B through the wireless communication (as shown in FIG. 11). Preferably but not exclusively, the wireless communication is performed by one selected from the group consisting of a Wi-Fi module, a Bluetooth module, a radio frequency identification module and a near field communication module.

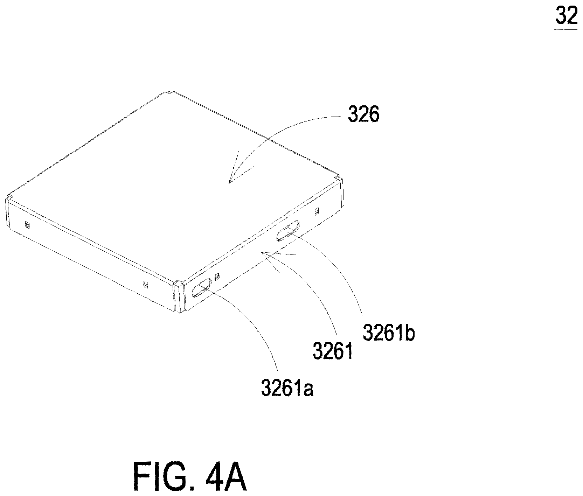

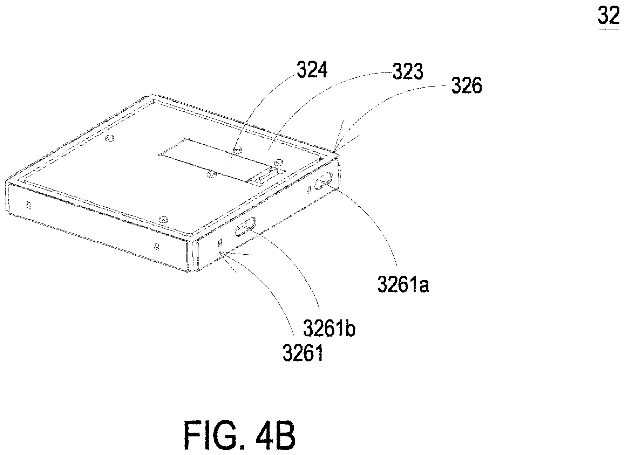

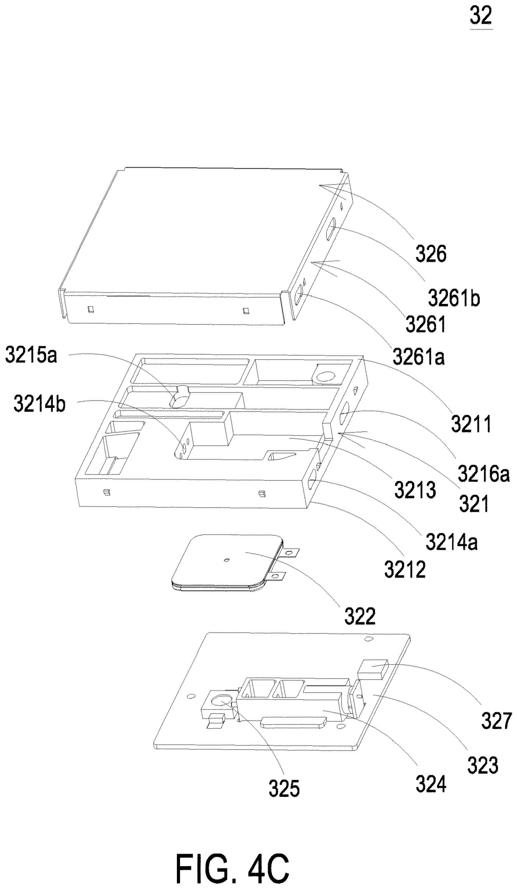

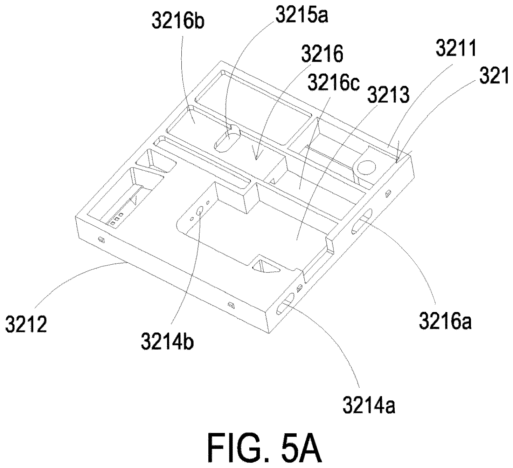

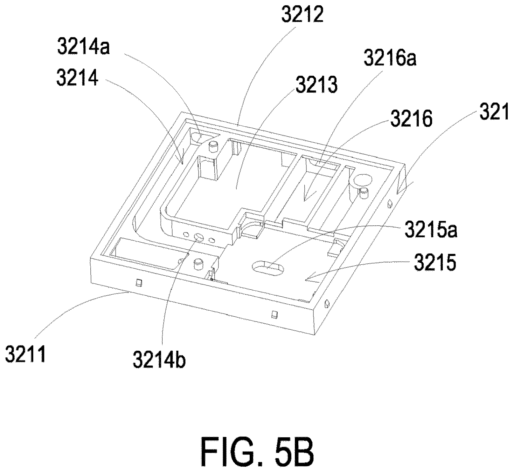

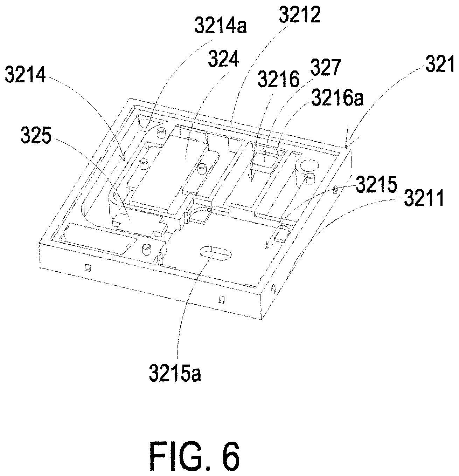

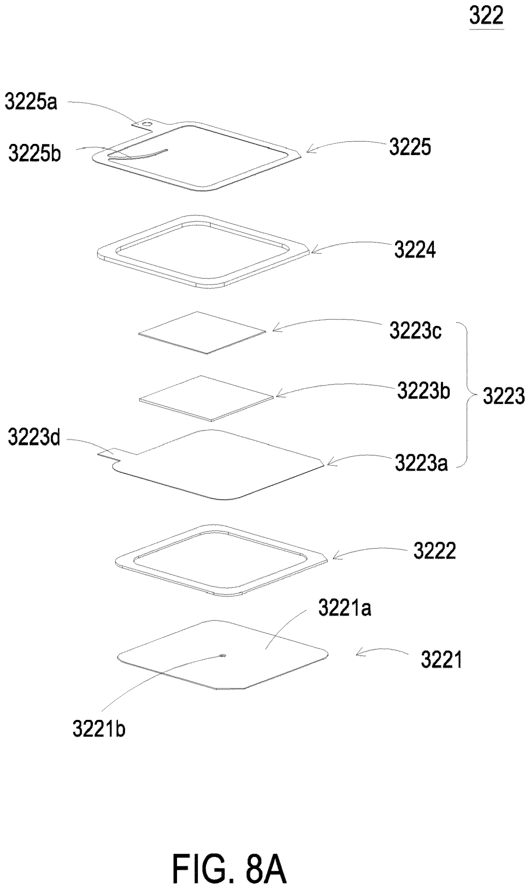

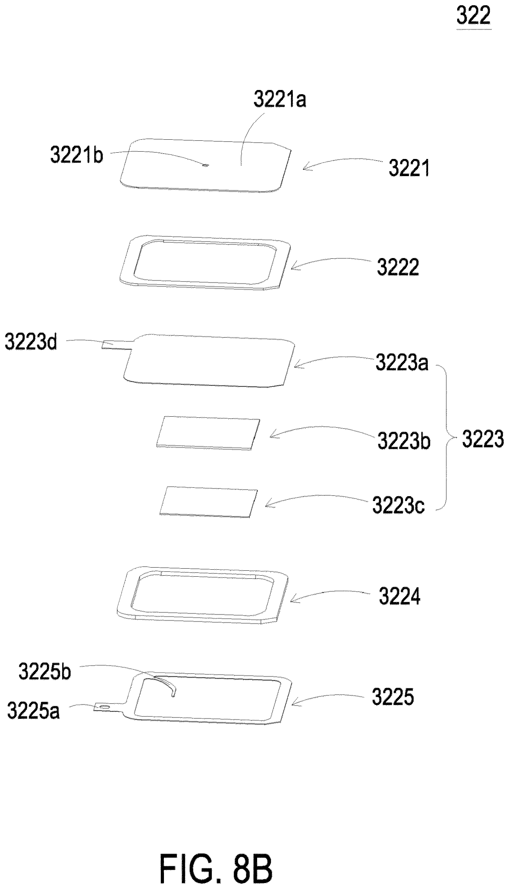

Please refer to FIG. 4A to FIG. 9A. The gas detection main body 301 includes a base 321, a piezoelectric actuator 322, a driving circuit board 323, a laser component 324, a particulate sensor 325 and an outer cover 326. The base 321 includes a first surface 3211, a second surface 3212, a laser loading region 3213, a gas-inlet groove 3214, a gas-guiding-component loading region 3215 and a gas-outlet groove 3216. In the embodiment, the first surface 3211 and the second surface 3212 are two surfaces opposite to each other. The laser component 324 is hollowed out from the first surface 3211 to the second surface 3212. The outer cover 326 covers the base 321 and includes a lateral plate 3261. The lateral plate 3261 includes an inlet opening 3261a and an outlet opening 3261b. The gas-inlet groove 3214 is concavely formed from the second surface 3212 and disposed adjacent to the laser loading region 3213. The gas-inlet groove 3214 includes a gas-inlet 3214a in communication with an environment outside the base 321, and is spatially corresponding in position to the inlet opening 3261a of the outer cover 326. Two transparent windows 3214b are respectively opened on two lateral walls of the gas-inlet groove 3214 and are in communication with the laser loading region 3213. Therefore, as the first surface 3211 of the base 321 is covered and attached by the outer cover 326 and the second surface 3212 is covered and attached by the driving circuit board 323, an inlet path is defined by the gas-inlet groove 3214.

In the embodiment, the gas-guiding-component loading region 3215 is concavely formed from the second surface 3212 and in communication with the gas-inlet groove 3214. A ventilation hole 3215a penetrates a bottom surface of the gas-guiding-component loading region 3215, and four positioning protrusions 3215b are disposed at four corners of the gas-guiding-component loading region 3215, respectively. The gas-outlet groove 3216 mentioned above includes a gas-outlet 3216a, and the gas-outlet 3216a is spatially corresponding to the outlet opening 3261b of the outer cover 326. The gas-outlet groove 3216 includes a first section 3216b and a second section 3216c. The first section 3216b is concavely formed from a region of the first surface 3211 spatially corresponding to a vertical projection area of the gas-guiding-component loading region 3215. The second section 3216c is hollowed out from the first surface 3211 to the second surface 3212 in a region where the first surface 3211 is misaligned with the vertical projection area of the gas-guiding-component loading region 3215 and extended therefrom. The first section 3216b and the second section 3216c are connected to form a stepped structure. Moreover, the first section 3216b of the gas-outlet groove 3216 is in communication with the ventilation hole 3215a of the gas-guiding-component loading region 3215, and the second section 3216c of the gas-outlet groove 3216 is in communication with the gas-outlet 3216a. In that, when the first surface 3211 of the base 321 is attached and covered by the outer cover 326 and the second surface 3212 of the base 321 is attached and covered by the driving circuit board 323, the gas-outlet groove 3216 and the driving circuit board 323 collaboratively define an outlet path.

The laser component 324 and the particulate sensor 325 mentioned above are disposed on the driving circuit board 323 and located within the base 321. In order to clearly describe and illustrate the positions of the laser component 324 and the particulate sensor 325 in the base 321, the driving circuit board 323 is specifically omitted. The laser component 324 is accommodated in the laser loading region 3213 of the base 321, and the particulate sensor 325 is accommodated in the gas-inlet groove 3214 of the base 321 and is aligned to the laser component 324. In addition, the laser component 324 is spatially corresponding to the transparent window 3214b, thereby a light beam emitted by the laser component 324 passes through the transparent window 3214b and irradiates into the gas-inlet groove 3214. Furthermore, the light beam path extends from the laser component 324 and passes through the transparent window 3214b in an orthogonal direction perpendicular to the gas-inlet groove 3214. In the embodiment, a projecting light beam emitted from the laser component 324 passes through the transparent window 3214b and enters the gas-inlet groove 3214 to irradiate the gas in the gas-inlet groove 3214. When the suspended particles contained in the gas are irradiated and generate scattered light spots, the scattered light spots are detected and calculated by the particulate sensor 325, which is in an orthogonal direction perpendicular to the gas-inlet groove 3214, for obtaining the detection data of the gas. Moreover, a gas sensor 327 is positioned and disposed on the driving circuit board 323, electrically connected to the driving circuit board 323, and accommodated in the gas-outlet groove 3216, for detecting the air pollution introduced into the gas-outlet groove 3216. Preferably but not exclusively, the gas sensor 327 is a volatile-organic-compound sensor for detecting information of carbon dioxide or total volatile organic compounds, or a formaldehyde sensor for detecting information of formaldehydes, or a bacteria sensor for detecting information of bacteria or fungi, or a virus senor for detecting information of viruses.

The piezoelectric actuator 322 mentioned above is accommodated in the square-shaped gas-guiding-component loading region 3215 of the base 321. In addition, the gas-guiding-component loading region 3215 is in communication with the gas-inlet groove 3214. When the piezoelectric actuator 322 is enabled, the gas in the gas-inlet groove 3214 is inhaled by the piezoelectric actuator 322, so that the gas flows into the piezoelectric actuator 322 and is transported into the gas-outlet groove 3216 through the ventilation hole 3215a of the gas-guiding-component loading region 3215. The driving circuit board 323 mentioned above covers and attaches to the second surface 3212 of the base 321, and the laser component 324 is positioned and disposed on the driving circuit board 323, and is electrically connected to the driving circuit board 323. The particulate sensor 325 also is positioned and disposed on the driving circuit board 323, and is electrically connected to the driving circuit board 323. When the outer cover 326 covers the base 321, the inlet opening 3261a is spatially corresponding to the gas-inlet 3214a of the base 321, and the outlet opening 3261b is spatially corresponding to the gas-outlet 3216a of the base 321.

The piezoelectric actuator 322 mentioned above includes a gas-injection plate 3221, a chamber frame 3222, an actuator element 3223, an insulation frame 3224 and a conductive frame 3225. In the embodiment, the gas-injection plate 3221 is made by a flexible material and includes a suspension plate 3221a and a hollow aperture 3221b. The suspension plate 3221a is a sheet structure and is permitted to undergo a bending deformation. Preferably but not exclusively, the shape and the size of the suspension plate 3221a are corresponding to the inner edge of the gas-guiding-component loading region 3215, but not limited thereto. The hollow aperture 3221b penetrates a center of the suspension plate 3221a, so as to allow the gas to flow therethrough. Preferably but not exclusively, the shape of the suspension plate 3221a is selected from the group consisting of a square, a circle, an ellipse, a triangle and a polygon.

The chamber frame 3222 mentioned above is carried and stacked on the gas-injection plate 3221. In addition, the shape of the chamber frame 3222 is corresponding to the gas-injection plate 3221. The actuator element 3223 is carried and stacked on the chamber frame 3222 and collaboratively defines a resonance chamber 3226 with the chamber frame 3222 and the suspension plate 3221a. The insulation frame 3224 is carried and stacked on the actuator element 3223 and the appearance of the insulation frame 3224 is similar to that of the chamber frame 3222. The conductive frame 3225 is carried and stacked on the insulation frame 3224, and the appearance of the conductive frame 3225 is similar to that of the insulation frame 3224. In addition, the conductive frame 3225 includes a conducting pin 3225a extended outwardly from an outer edge of the conducting pin 3225a and a conducting electrode 3225b extended inwardly from an inner edge of the conductive frame 3225. Moreover, the actuator element 3223 further includes a piezoelectric carrying plate 3223a, an adjusting resonance plate 3223b and a piezoelectric plate 3223c. The piezoelectric carrying plate 3223a is carried and stacked on the chamber frame 3222. The adjusting resonance plate 3223b is carried and stacked on the piezoelectric carrying plate 3223a. The piezoelectric plate 3223c is carried and stacked on the adjusting resonance plate 3223b. The adjusting resonance plate 3223b and the piezoelectric plate 3223c are accommodated in the insulation frame 3224. The conducting electrode 3225b of the conductive frame 3225 is electrically connected to the piezoelectric plate 3223c. In the embodiment, the piezoelectric carrying plate 3223a and the adjusting resonance plate 3223b are made by a conductive material. The piezoelectric carrying plate 3223a includes a piezoelectric pin 3223d. The piezoelectric pin 3223d and the conducting pin 3225a are electrically connected to a driving circuit (not shown) on the driving circuit board 323, so as to receive a driving signal (which can be a driving frequency and a driving voltage). Through this structure, a circuit is formed by the piezoelectric pin 3223d, the piezoelectric carrying plate 3223a, the adjusting resonance plate 3223b, the piezoelectric plate 3223c, the conducting electrode 3225b, the conductive frame 3225 and the conducting pin 3225a for transmitting the driving signal. Moreover, the insulation frame 3224 provides insulation between the conductive frame 3225 and the actuator element 3223, so as to avoid the occurrence of a short circuit. Accordingly, the driving signal is transmitted to the piezoelectric plate 3223c. After receiving the driving signal, the piezoelectric plate 3223c deforms due to the piezoelectric effect, and the piezoelectric carrying plate 3223a and the adjusting resonance plate 3223b are further driven to bend and vibrate in the reciprocating manner.

More specifically, the adjusting resonance plate 3223b is located between the piezoelectric plate 3223c and the piezoelectric carrying plate 3223a and served as a cushion therebetween, so that the vibration frequency of the piezoelectric carrying plate 3223a is adjustable. Basically, the thickness of the adjusting resonance plate 3223b is greater than the thickness of the piezoelectric carrying plate 3223a, and the thickness of the adjusting resonance plate 3223b is adjustable to adjust the vibration frequency of the actuator element 3223 accordingly.

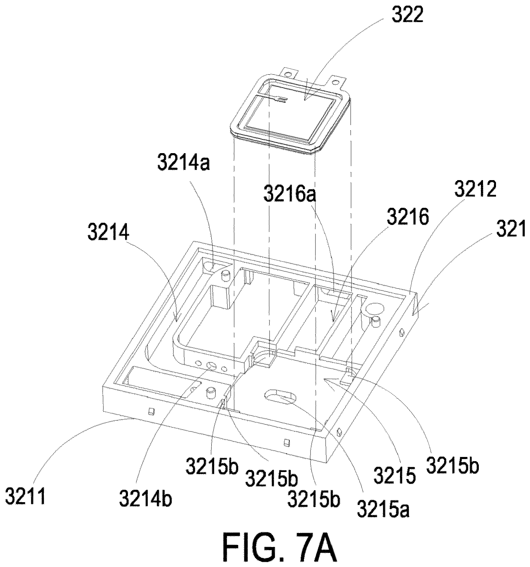

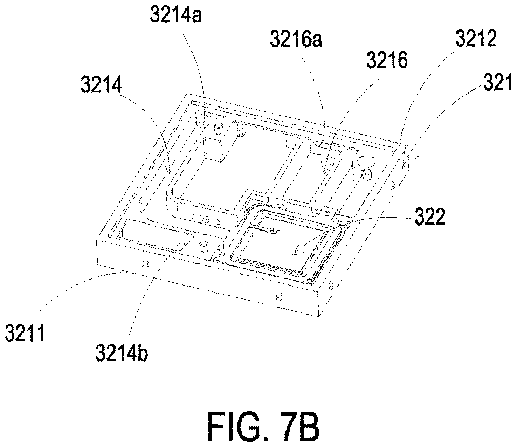

Please refer to FIG. 7A, FIG. 7B, FIG. 8A, FIG. 8B and FIG. 9A. The gas-injection plate 3221, the chamber frame 3222, the actuator element 3223, the insulation frame 3224 and the conductive frame 3225 are stacked and positioned in the gas-guiding-component loading region 3215 sequentially, so that the piezoelectric actuator 322 is supported and positioned in the gas-guiding-component loading region 3215. A clearance 3221c is defined by the piezoelectric actuator 322 between the suspension plate 3221a and an inner edge of the gas-guiding-component loading region 3215 for gas flowing therethrough. A flowing chamber 3227 is formed between the gas-injection plate 3221 and the bottom surface of the gas-guiding-component loading region 3215. The flowing chamber 3227 is in communication with the resonance chamber 3226 located between the actuator element 3223, the chamber frame 3222 and the suspension plate 3221a through the hollow aperture 3221b of the gas-injection plate 3221. By controlling the vibration frequency of the gas in the resonance chamber 3226 to be close to the vibration frequency of the suspension plate 3221a, the Helmholtz resonance effect is generated between the resonance chamber 3226 and the suspension plate 3221a, so as to improve the efficiency of gas transportation. When the piezoelectric plate 3223c moves away from the bottom surface of the gas-guiding-component loading region 3215, the suspension plate 3221a of the gas-injection plate 3221 is driven by the piezoelectric plate 3223c to move away from the bottom surface of the gas-guiding-component loading region 3215. In that, the volume of the flowing chamber 3227 is expanded rapidly, the internal pressure of the flowing chamber 3227 is decreased and generates a negative pressure, and the gas outside the piezoelectric actuator 322 is inhaled through the clearance 3221c and enters the resonance chamber 3226 through the hollow aperture 3221b. Consequently, the pressure in the resonance chamber 3226 is increased to generate a pressure gradient. When the suspension plate 3221a of the gas-injection plate 3221 is driven by the piezoelectric plate 3223c to move toward the bottom surface of the gas-guiding-component loading region 3215, the gas in the resonance chamber 3226 is discharged out rapidly through the hollow aperture 3221b, and the gas in the flowing chamber 3227 is compressed, so that the converged gas is quickly and massively ejected out of the flowing chamber 3227 under the condition close to an ideal gas state of the Bernoulli's law, and transported to the ventilation hole 3215a of the gas-guiding-component loading region 3215.

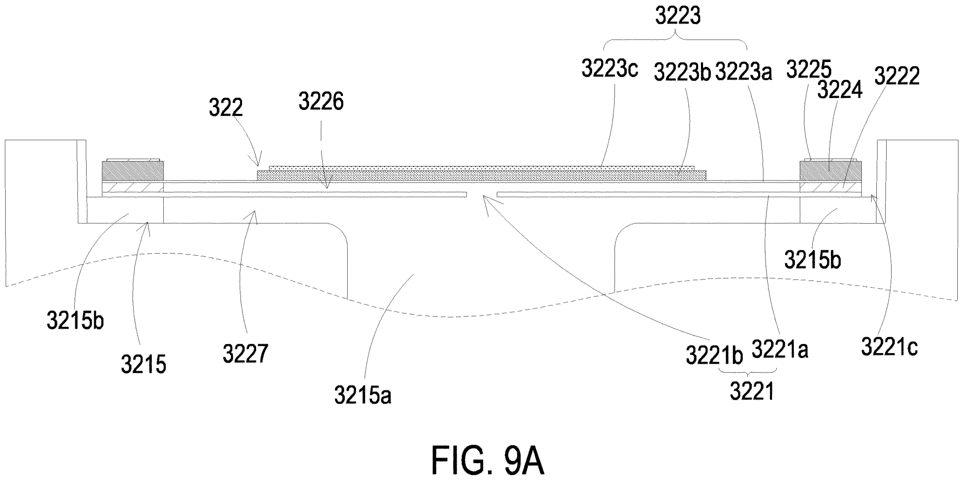

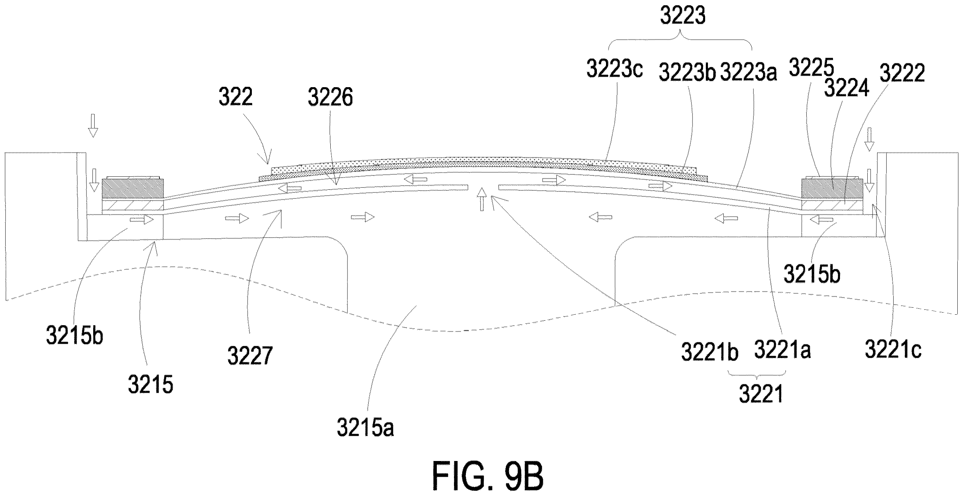

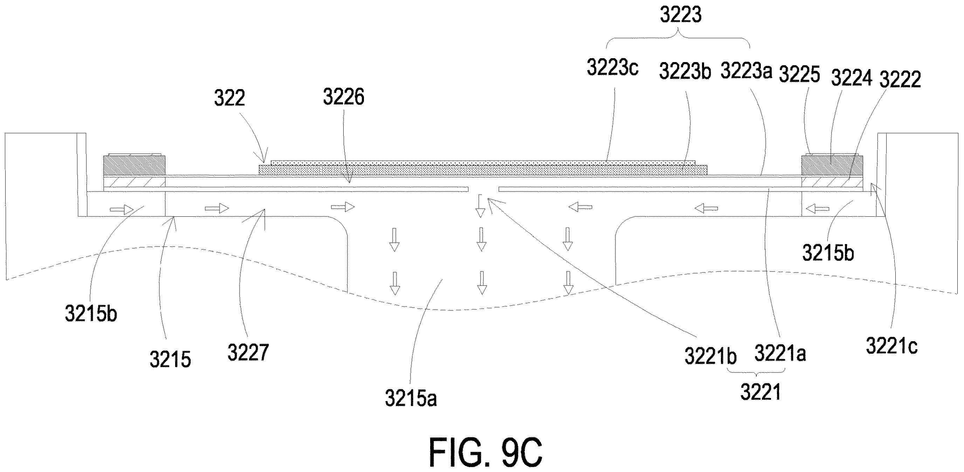

By repeating the operation steps shown in FIG. 9B and FIG. 9C, the piezoelectric plate 3223c is driven to vibrate in a reciprocating manner. According to the principle of inertia, since the gas pressure inside the resonance chamber 3226 is lower than the equilibrium gas pressure after the converged gas is ejected out, the gas is introduced into the resonance chamber 3226 again. Moreover, the vibration frequency of the gas in the resonance chamber 3226 is controlled to be close to the vibration frequency of the piezoelectric plate 3223c, so as to generate the Helmholtz resonance effect to achieve the gas transportation at high speed and in large quantities. The gas is inhaled through the inlet opening 3261a of the outer cover 326, flows into the gas-inlet groove 3214 of the base 321 through the gas-inlet 3214a, and is transported to the position of the particulate sensor 325. Furthermore, the piezoelectric actuator 322 is enabled continuously to inhale the gas into the inlet path so as to facilitate the external gas to be introduced rapidly, flowed stably, and be transported above the particulate sensor 325. At this time, a projecting light beam emitted from the laser component 324 passes through the transparent window 3214b and enters into the gas-inlet groove 3214 to irritate the suspended particles contained in the gas flowing above the particulate sensor 325 in the gas-inlet groove 3214. When the suspended particles contained in the gas are irradiated and generate scattered light spots, the scattered light spots are received and calculated by the particulate sensor 325 for obtaining related information about the sizes and the concentrations of the suspended particles contained in the gas. Moreover, the gas above the particulate sensor 325 is continuously driven and transported by the piezoelectric actuator 322, flows into the ventilation hole 3215a of the gas-guiding-component loading region 3215, and is transported to the gas-outlet groove 3216. Finally, after the gas flows into the gas-outlet groove 3216, the gas is continuously transported into the gas-outlet groove 3216 by the piezoelectric actuator 322, and the gas in the gas-outlet groove 3216 is pushed and discharged out through the gas-outlet 3216a and the outlet opening 3261b.

The gas detection device 3 of the present disclosure not only includes the particulate sensor 325 for detecting information of particulate matter (such as PM1 PM2.5, PM10), but also detects the properties of the introduced gas, for example, for identifying the gas as formaldehyde, ammonia, carbon monoxide, carbon dioxide, oxygen or ozone. Therefore, the gas detection device 3 of the present disclosure further includes the gas sensor 327. The gas sensor 327 is positioned and disposed on the driving circuit board 323, electrically connected to the driving circuit board 323, and accommodated in the gas-outlet groove 3216, so as to detect the gases contained in the gas exhausted out through the outlet path. In an embodiment, the gas sensor 327 includes a volatile-organic-compound sensor for detecting the gas information of carbon dioxide or volatile organic compounds. In another embodiment, the gas sensor 327 includes a formaldehyde sensor for detecting the gas information of formaldehyde. In another embodiment, the gas sensor 327 includes a bacteria sensor for detecting the information of bacteria or fungi. In another embodiment, the gas sensor 327 includes a virus sensor for detecting the information of virus.

The central controlling monitor B mentioned above is one of a central controlling box or a portable mobile device which receives the outdoor air pollution data and the indoor air pollution data through the wireless communication, performs the intelligent computation to compare thereof, and intelligently and selectively issues the control instruction. In an embodiment, the central controlling monitor B is the portable mobile device with an application (APP) of indoor air pollution prevention for executing the control instruction and displaying the outdoor/indoor air pollution data. Here, the wireless communication is performed by one selected from the group consisting of a Wi-Fi module, a Bluetooth module, a radio frequency identification module and a near field communication module. In another embodiment, the central controlling monitor B is connected to a cloud device E through a network, and the cloud device E receives the outdoor air pollution data and the indoor air pollution data collected by the central controlling monitor B, performs the intelligent computation to compare thereof and determine an air pollution location in the indoor space, and intelligently and selectively issues the control instruction.

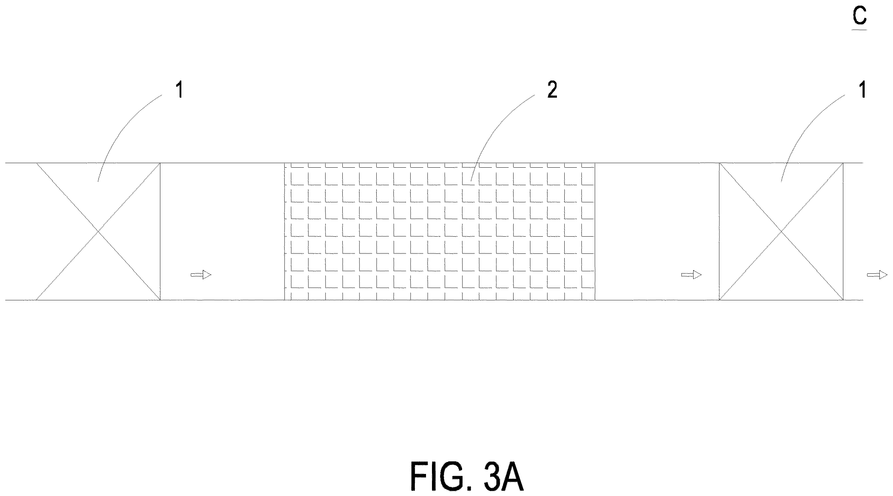

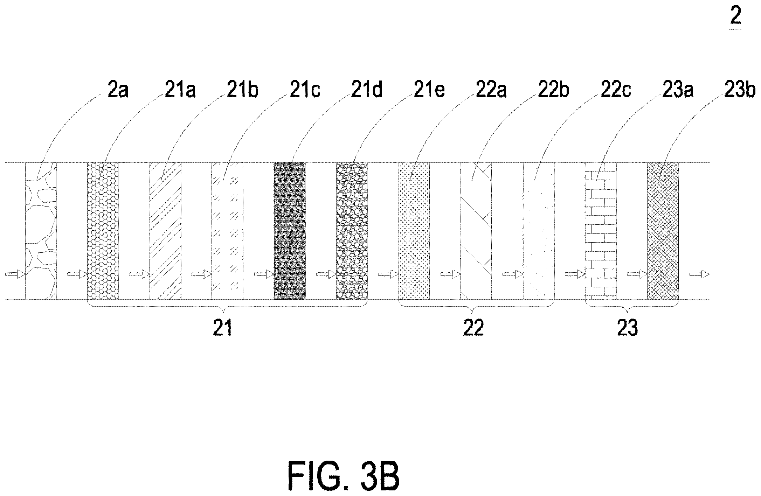

Please refer to FIG. 1A. Each of the air-exchanging filtration devices C mentioned above includes at least one gas guider 1 and at least one filter element 2. The gas guider 1 is capable of bi-directionally transporting a gas, namely, is equipped with functions of inhaling and exhaling. In the embodiment, the flowing directions of the gas are indicated by arrows. The gas guider 1 can be disposed at the front side of the filter element 2, at the rear side of the filter element 2, or at both the front side and the rear side of the filter element 2 (as shown in FIG. 3A), and the design of the gas guider 1 can be adjusted in accordance with practical demands without limitation. Furthermore, each of the air-exchanging filtration devices C is combined with an intelligent switch D. Here, the intelligent switch D refers to a unit capable of intelligently switching on/off a circuit through a combination of a controlling board and electronic components as well as programming, namely, the intelligent switch controls the switch on/off of a device through a wireless communication. In the embodiment, the intelligent switch D is triggered to enable the gas guider 1 after receiving the control instruction, and the intelligent switch D receives the control instruction through the wireless communication, that is, the intelligent switch D receives the control instruction transmitted by the central controlling monitor B through the wireless communication. In the embodiment, the wireless communication is performed by one selected from the group consisting of a Wi-Fi module, a Bluetooth module, a radio frequency identification module and a near field communication (NFC) module.

The functionality of the wireless communication between the intelligent switch D and the air-exchanging filtration devices C is detected and judged by the central controlling monitor B, and when the wireless communication does not function normally, an alarm is displayed or sent out for notifying the user to manually enable the air-exchanging filtration device(s) C. This debug mechanism takes precautions against the failure of wireless communication in advance, and accordingly, the system for purifying the indoor air pollution can function normally to quickly guide the air pollution to pass through the filter element 2 for being filtered and air-exchanged to achieve the safe detection value as detected by the plurality gas detection devices in the indoor space, and also for being purified to a level close to zero, thereby cleaning the air pollution to a breathable state.

As shown in FIG. 1B, each of the air-exchanging filtration devices is equipped with one gas detection device A for controlling the operation thereof, receiving the control instruction to enable/disable the gas guider 1, and adjusting a gas volume of the gas guider 1. In the embodiment, the gas detection device A in the air-exchanging filtration device C enables the gas guider 1 as the indoor air pollution data exceeds the safe detection value, and controls the gas guider 1 to adjust the gas volume based on the indoor air pollution data, so as to intelligently achieve an enabling and adjusting mechanism for the air-exchanging filtration device C. That is, when the gas detection device A equipped in the air-exchanging filtration device C detects that the air pollution nearby exceeds the safe detection value, the gas detection device A automatically enables the gas guider 1 of the air-exchanging filtration device C and controls the gas guider 1 to adjust the gas volume thereof based on the indoor air pollution data so as to form a gas convection to guide the air pollution to quickly pass through the filter element 2 nearby for being filtered and purified, thereby achieving an intelligent, promptly controlled and power-saving air-purification mechanism for the air-exchanging filtration device C. In the embodiment, the structure of the gas detection device A is the same with that of the gas detection device 3 mentioned above, and the control circuit board 31 of the gas detection device A is identically used to control the enablement/disablement of the gas guider 1 and to adjust the gas volume of the gas guider 1, so that further details are omitted.

As known from the above descriptions, the system for purifying the indoor air pollution of the present disclosure is performed as follows. The plurality of gas detection devices A are arranged in the indoor space for detecting the air pollution through at least one outdoor gas detector A0 and at least one indoor gas detector A1, and thus, outputting the outdoor air pollution data and the indoor air pollution data. Then, the central controlling monitor B receives the outdoor air pollution data and the indoor air pollution data through the wireless communication, and the cloud device E connected to the central controlling monitor B performs the intelligent computation to compare the outdoor air pollution data and the indoor air pollution data received by the central controlling monitor B. If the indoor air pollution data is greater than the outdoor air pollution data, the control instruction is issued to the central controlling monitor B for promptly enabling the gas guider of the air-exchanging filtration device C to quickly exhaust the air pollution in the indoor space to the outdoor space through air exchanging, and further guide the air pollution to circularly pass through the filter element 2 for being filtered and purified to the safe detection value. In an embodiment, the air-exchanging filtration device C is a heating ventilation and air conditioning (HVAC) system and the filter element 2 is a filter screen with a minimum efficiency reporting value (MERV) rating greater than 8, for quickly exhausting the air pollution in the indoor space to the outdoor space through air exchanging. In another embodiment, the air-exchanging filtration device C is a fresh air exchange system and the filter element 2 is a high efficiency particulate air (HEPA) filter, for quickly exhausting the air pollution in the indoor space to the outdoor space through air exchanging.

Furthermore, the cloud device E performs the intelligent computation to compare the indoor air pollution data, and the intelligent computation includes an artificial intelligence (AI) computation and a big data comparison. The intelligent computation is performed to determine a location with the highest indoor air pollution data as the air pollution location in the indoor space, or to compare indoor air pollution data detected by at least three of the indoor gas detection devices and determine the air pollution location in the indoor space from at least three detection locations. At this time, after the cloud device E determines the air pollution location in the indoor space, the control instruction is issued to the central controlling monitor B. The central controlling monitor B receives and sends out the control instruction to the plurality of air-exchanging filtration devices C for achieving the enabling and adjusting mechanism. The enabling and adjusting mechanism is performed as follows. The air-exchanging filtration device C near the air pollution location receives the control instruction and is preferentially enabled to form an air-pollution cleaning path, namely, the air-exchanging filtration device C near the air pollution location is firstly enabled. Then, the control instruction is further issued to other air-exchanging filtration devices C which are located out of the air pollution location for enabling thereof, namely, the gas guiders 1 of the air-exchanging filtration devices C out of the air pollution location are secondly enabled, so as to form a gas convection toward the air pollution for speeding up a convectional circulation near the air pollution location. Therefore, not only the air pollution near the air pollution location is filtered and purified by the air-exchanging filtration device C near the air pollution location, but also the air pollution which diffuses to locations other than the air pollution location is filtered and purified by the other air-exchanging filtration devices C, thereby achieving the safe detection value in the indoor space, and quickly forming the detection-based cleaning which purifies the air pollution to a level of zero or close to zero in real time, so as to clean the air pollution to the safely breathable state. Notably, in the embodiment, the air-exchanging filtration device C as shown in FIG. 1 is one selected from the group consisting of a fresh air exchange system C1, a purifier C2, an air conditioning device C3, an exhaust fan C4, a fan C5, a range hood C6, and a combination thereof, but not limited thereto. That is, the type and/or quantity of the air-exchanging filtration device C is not limited to single one, and can be more than one. The type and quantity of the air-exchanging filtration device C can be adjusted according to the indoor space and the air quality needed.

In the embodiment, the filter element 2 of the air-exchanging filtration device C mentioned above is a filter screen which cleans the air pollution through physically blocking and absorbing, or the filter element 2 cleans the air pollution chemically through coating a decomposition layer 21, or the filter element 2 is combined with a light irradiation element 22 to clean the air pollution chemically, or the filter element 2 is combined with a decomposition unit 23 to clean the air pollution chemically, but not limited thereto. Preferably but not exclusively, the filter screen is a high efficiency particulate air (HEPA) filter screen 2a, which is configured to absorb the chemical smokes, bacteria, dust particles and pollens contained in the air pollution, so that the air pollution introduced into the filter element 2 is filtered and purified to achieve the effect of filtering and purification. Preferably but not exclusively, the decomposition layer 21 includes an activated carbon 21a, which is configured to remove the organic and inorganic substances in the air pollution and remove the colored and odorous substances. Preferably but not exclusively, the decomposition layer 21 includes a cleansing factor containing chlorine dioxide 21b, which is configured to inhibit viruses, bacteria, fungi, influenza A, influenza B, enterovirus and norovirus in the air pollution, and the inhibition ratio can reach 99%, thereby reducing the cross-infection of viruses. Preferably but not exclusively, the decomposition layer 21 includes an herbal protective layer 21c extracted from ginkgo and Japanese *rhus chinensis* which is configured to resist allergy effectively and destroy a surface protein of influenza virus (e.g., H1N1) passing therethrough. Preferably but not exclusively, the decomposition layer 21 includes a silver ion 21d, which is configured to inhibit viruses, bacteria and fungi contained in the air pollution. Preferably but not exclusively, the decomposition layer 21 includes a zeolite 21e, which is configured to remove ammonia nitrogen, heavy metals, organic pollutants, *Escherichia coli,* phenol, chloroform and anionic surfactants. Preferably but not exclusively, the light irradiation element 22 includes a photo-catalyst unit including a photo catalyst 22a and an ultraviolet lamp 22b. When the photo catalyst 22a is irradiated by the ultraviolet lamp 22b, the light energy is converted into the chemical energy to decompose harmful substances contained in the air pollution and disinfect bacteria contained in the air pollution, so as to achieve the effects of filtering and purifying. Preferably but not exclusively, the light irradiation element 22 includes a photo-plasma unit including a nanometer irradiation tube 22c. When the introduced air pollution is irradiated by the nanometer irradiation tube 22c, oxygen molecules and water molecules contained in the air pollution are decomposed into high oxidizing photo-plasma to generate an ion flow capable of destroying organic molecules, so that volatile formaldehyde, volatile toluene and volatile organic compounds (VOC) contained in the air pollution are decomposed into water and carbon dioxide, so as to achieve the effects of filtering and purifying.

In summary, the present disclosure provides a method for purifying an air pollution in an indoor space to a level close to zero. First, an indoor leaking detection is provided and a blocking process is executed for blocking an outdoor air from entering the indoor space and maintaining the air pollution in the indoor space not increased. Further, an indoor monitoring system is applied in the indoor space. In the indoor monitoring system, a plurality of gas detection devices detect an air quality in the indoor space in real time and output signals to a central controlling monitor for performing an intelligent computation for comparison. The central controlling monitor is further connected to a cloud device for performing various mathematical computations and artificial intelligence computations to determine an air pollution location in the indoor space so as to intelligently and selectively issue a control instruction. The control instruction enables one of a plurality of air-exchanging filtration devices which is closest to the air pollution location to generate an air flow for guiding the air pollution to the plurality of air-exchanging filtration devices for performing a convectional and circular filtering. The enablement of the plurality of air-exchanging filtration devices is based on the detected air quality, so the air pollution can be filtered, air-exchanged and purified to a safe detection value as detected by the plurality of gas detection devices in the indoor space, and a detection-based cleaning which promptly and quickly purifies the air pollution to a level of zero or close to zero can be formed, thereby cleaning the air pollution to a breathable state, and also achieving efficiencies of positioning air pollution, guiding air pollution and cleaning air pollution. Therefore, the method is valuable for industrial usage.

## Claims

1. A method for purifying an air pollution in an indoor space to a level close to zero, **characterized by** comprising:
providing an indoor leaking detection for blocking an outdoor air from entering the indoor space; and
providing an indoor monitoring system in the indoor space, the indoor monitoring system comprising a plurality of gas detection devices (A, 3), a central controlling monitor (B) and a plurality of air-exchanging filtration devices (C), wherein the plurality of gas detection devices (A, 3) comprise at least one indoor gas detector (A1) and at least one outdoor gas detector (A0) for detecting a property and a concentration of the air pollution and outputting outdoor air pollution data and indoor air pollution data, the central controlling monitor (B) receives the outdoor air pollution data and the indoor air pollution data, performs an intelligent computation to compare thereof and determine an air pollution location in the indoor space, and intelligently and selectively issues a control instruction, and the plurality of air-exchanging filtration devices (C) receive the control instruction and perform an enabling and adjusting mechanism for guiding the air pollution to pass through the plurality of air-exchanging filtration devices (C) for being filtered and air-exchanged so as to achieve a safe detection value as detected by the plurality of gas detection devices (A, 3) in the indoor space, and for forming a detection-based cleaning which promptly and quickly purifies the air pollution to a level of zero or close to zero, thereby cleaning the air pollution to a breathable state.

2. The method for purifying an air pollution in an indoor space to a level close to zero as claimed in claim 1, wherein the air pollution is at least one selected from the group consisting of particulate matter, carbon monoxide, carbon dioxide, ozone, sulfur dioxide, nitrogen dioxide, lead, total volatile organic compounds, formaldehyde, bacteria, fungi, virus, and a combination thereof.

3. The method for purifying an air pollution in an indoor space to a level close to zero as claimed in claim 1, wherein the safe detection value comprises at least one selected from the group consisting of a concentration of PM2.5 which is less than 10 µg/m³, a concentration of carbon dioxide (CO2) which is less than 1000 ppm, a concentration of total volatile organic compounds (TVOC) which is less than 0.56 ppm, a concentration of formaldehyde (HCHO) which is less than 0.08 ppm, a colony-forming unit of bacteria which is less than 1500 CFU/m³, a colony-forming unit of fungi which is less than 1000 CFU/m³, a concentration of sulfur dioxide which is less than 0.075 ppm, a concentration of nitrogen dioxide which is less than 0.1 ppm, a concentration of carbon monoxide which is less than 9 ppm, a concentration of ozone which is less than 0.06 ppm, and a concentration of lead which is less than 0.15 µg/m³.

4. The method for purifying an air pollution in an indoor space to a level close to zero as claimed in claim 1, wherein the safe detection value comprises the level of zero or close to zero of the indoor air pollution data detected from the air pollution.

5. The method for purifying an air pollution in an indoor space to a level close to zero as claimed in claim 1, wherein the outdoor gas detector (A0) and the indoor gas detector (A1) are respectively a gas detection device (3), and wherein the gas detection device (3) comprises a controlling circuit board (31), a gas detection main body (32), a microprocessor (33) and a communicator (34), the gas detection main body (32), the microprocessor (33) and the communicator (34) are integrally packaged on and electrically connected to the controlling circuit board (31), the microprocessor (33) controls an operation of the gas detection main body (32), the gas detection main body (32) detects the air pollution and outputs a detection signal, and the microprocessor (33) receives, calculates and processes the detection signal for generating and outputting the outdoor/indoor air pollution data to the communicator (34) for externally transmitting to the central controlling monitor (B) through a wireless communication.

6. The method for purifying an air pollution in an indoor space to a level close to zero as claimed in claim 5, wherein the gas detection main body (32) comprises:
a base (321) comprising:
a first surface (3211);
a second surface (3212) opposite to the first surface (3211);
a laser loading region (3213) hollowed out from the first surface (3211) to the second surface (3212);
a gas-inlet groove (3214) concavely formed from the second surface (3212) and disposed adjacent to the laser loading region (3213), wherein the gas-inlet groove (3214) comprises a gas-inlet (3214a) and two lateral walls, and a transparent window (3214b) is respectively opened on the two lateral walls for being in communication with the laser loading region (3213);
a gas-guiding-component loading region (3215) concavely formed from the second surface (3212) and in communication with the gas-inlet groove (3214), and having a ventilation hole (3215a) penetrated a bottom surface thereof; and
a gas-outlet groove (3216) concavely formed from a region of the first surface (3211) spatially corresponding to the bottom surface of the gas-guiding-component loading region (3215) and hollowed out from the first surface (3211) to the second surface (3212) in a region where the first surface (3211) is misaligned with the gas-guiding-component loading region (3215), wherein the gas-outlet groove (3216) is in communication with the ventilation hole (3215a) and comprises a gas-outlet (3216a) mounted thereon;
a piezoelectric actuator (322) accommodated in the gas-guiding-component loading region (3215);
a driving circuit board (323) covering and attaching to the second surface (3212) of the base (321);
a laser component (324) positioned and disposed on the driving circuit board (323) and electrically connected to the driving circuit board (323), and accommodated in the laser loading region (3213), wherein a light beam path emitted by the laser component (324) passes through the transparent window (3214b) and extends in an orthogonal direction perpendicular to the gas-inlet groove (3214);
a particulate sensor (325) positioned and disposed on the driving circuit board (323) and electrically connected to the driving circuit board (323), and accommodated in the gas-inlet groove (3214) at a region in an orthogonal direction perpendicular to the light beam path emitted by the laser component (324) for detecting suspended particles contained in the air pollution passing through the gas-inlet groove (3214) and irradiated by a light beam emitted from the laser component (324);
a gas sensor (327) positioned and disposed on the driving circuit board (323) and electrically connected to the driving circuit board (323), and accommodated in the gas-outlet groove (3216), so as to detect the air pollution introduced into the gas-outlet groove (3216); and
an outer cover (326) covering the base (321) and comprising a lateral plate (3261), wherein the lateral plate (3261) comprises an inlet opening (3261a) and an outlet opening (3261b), the inlet opening (3261a) is spatially corresponding to the gas-inlet (3214a) of the base (321) and the outlet opening (3261b) is spatially corresponding to the gas-outlet (3216a) of the base (321),
wherein the outer cover (326) covers the base (321), and the driving circuit board (323) covers the second surface (3212), so that an inlet path is defined by the gas-inlet groove (3214), and an outlet path is defined by the gas-outlet groove (3216), and wherein the air pollution outside the gas-inlet (3214a) of the base (321) is inhaled by the piezoelectric actuator (322) and transported into the inlet path defined by the gas-inlet groove (3214) through the inlet opening (3261a), and passes through the particulate sensor (325) for detecting a concentration of the suspended particles contained in the air pollution, and the air pollution is further transported to the outlet path defined by the gas-outlet groove (3216) through the ventilation hole (3215a), passes through the gas sensor (327) for detecting, and then is discharged through the outlet opening (3261b).

7. The method for purifying an air pollution in an indoor space to a level close to zero as claimed in claim 6, wherein the particulate sensor (325) detects information of suspended particulates.

8. The method for purifying an air pollution in an indoor space to a level close to zero as claimed in claim 6, wherein the gas sensor (327) comprises one selected from the group consisting of a volatile-organic-compound sensor, a formaldehyde sensor, a bacteria sensor, a virus sensor, and a combination thereof, for correspondingly detecting information of carbon dioxide or total volatile organic compounds in a gas, information of formaldehyde in a gas, information of bacteria or fungi in a gas, or information of viruses in a gas.

9. The method for purifying an air pollution in an indoor space to a level close to zero as claimed in claim 1, wherein the central controlling monitor (B) is one of a central controlling box and a portable mobile device.

10. The method for purifying an air pollution in an indoor space to a level close to zero as claimed in claim 1, wherein the central controlling monitor (B) is connected to a cloud device (E) through a network, and the cloud device (E) receives the outdoor air pollution data and the indoor air pollution data collected by the central controlling monitor (B), performs the intelligent computation for comparing the outdoor air pollution data and the indoor air pollution data to determine the air pollution location in the indoor space, and intelligently and selectively issues the control instruction.

11. The method for purifying an air pollution in an indoor space to a level close to zero as claimed in claim 10, wherein the cloud device (E) performs the intelligent computation for comparing the outdoor air pollution data and the indoor air pollution data received by the central controlling monitor (B), and if the indoor air pollution data is greater than the outdoor air pollution data, the control instruction is intelligently issued to the central controlling monitor (B), and the central controlling monitor (B) enables the air-exchanging filtration devices (C) after receiving the control instruction, thereby quickly air exchanging and exhausting the air pollution in the indoor space to an outdoor space and guiding the air pollution to be quickly and circularly filtered and purified to the safe detection value.

12. The method for purifying an air pollution in an indoor space to a level close to zero as claimed in claim 10, wherein the cloud device (E) performs the intelligent computation to compare the indoor air pollution data, and the intelligent computation comprises an artificial intelligence (AI) computation and a big data comparison, and wherein the intelligent computation is performed to determine a location with highest indoor air pollution data as the air pollution location in the indoor space, or the intelligent computation is performed to compare the indoor air pollution data detected by at least three of the gas detection devices (A, 3) and determine the air pollution location in the indoor space from at least three detection locations.

13. The method for purifying an air pollution in an indoor space to a level close to zero as claimed in claim 12, wherein after the cloud device (E) determines the air pollution location in the indoor space and intelligently and selectively issues the control instruction to the central controlling monitor (B), the central controlling monitor (B) outputs the control instruction to the plurality of air-exchanging filtration devices (C) to perform the enabling and adjusting mechanism, and wherein in the enabling and adjusting mechanism, the control instruction is sent to the air-exchanging filtration device (C) near the air pollution location for preferentially enabling thereof to form an air-pollution cleaning path, and the control instruction is further sent to other air-exchanging filtration devices (C) located out of the air pollution location for enabling thereof to generate a gas convection toward the air pollution to speed up a convectional circulation near the air pollution location, so that the air pollution near the air pollution location is filtered and purified by the air-exchanging filtration device (C) near the air pollution location and the air pollution which diffuses to locations other than the air pollution location is filtered and purified by the other air-exchanging filtration devices (C), thereby achieving the safe detection value as detected by the plurality of gas detection devices (A, 3) in the indoor space, and forming the detection-based cleaning which promptly and quickly purifies the air pollution to a level of zero or close to zero, so as to clean the air pollution to the breathable state.

14. The method for purifying an air pollution in an indoor space to a level close to zero as claimed in claim 1, wherein each of the air-exchanging filtration devices (C) comprises at least one gas guider (1) and at least one filter element (2), and the central controlling monitor (B) outputs the control instruction through a wireless communication, wherein the air-exchanging filtration device (C) is cooperated with an intelligent switch (D), and the intelligent switch (D) enables the at least one gas guider (1) after receiving the control instruction through the wireless communication, and wherein a functionality of the wireless communication is detected and judged by the central controlling monitor (B), and when the wireless communication does not function normally, an alarm is displayed or sent out for notifying the user to manually enable the air-exchanging filtration device (C), thereby achieving a debug mechanism of preventing a failure of the wireless communication.

15. The method for purifying an air pollution in an indoor space to a level close to zero as claimed in claim 1, wherein each of the air-exchanging filtration devices (C) comprises at least one gas guider (1) and at least one filter element (2), and the central controlling monitor (B) outputs the control signal through a wireless communication, and wherein the air-exchanging filtration device (C) comprises one gas detection device (A, 3) disposed therein for enabling/disabling the at least one gas guider (1) and adjusting a gas volume of the at least one gas guider (1) after receiving the control instruction.

16. The method for purifying an air pollution in an indoor space to a level close to zero as claimed in claim 15, wherein the gas detection device (A, 3) of the air-exchanging filtration device (C) enables the at least one gas guider (1) as the outdoor/indoor air pollution data exceeds the safe detection value, and controls the at least one gas guider (1) to adjust the gas volume thereof based on the outdoor/indoor air pollution data.
